**Europäisches Patentamt**

**European Patent Office**

**Office européen des brevets**

(19)

(11) Numéro de publication : **0 494 833 A1**

## (12) DEMANDE DE BREVET EUROPEEN

(21) Numéro de dépôt : **92420001.7**

(22) Date de dépôt : **02.01.92**

(51) Int. Cl.$^5$ : **H01M 4/24,** H01M 4/36

(30) Priorité : **10.01.91 FR 9100394**

(43) Date de publication de la demande :
**15.07.92 Bulletin 92/29**

(84) Etats contractants désignés :
**BE CH DE ES FR GB IT LI NL SE**

(71) Demandeur : **SORAPEC S.A.**
**192, rue Carnot**
**F-94120 Fontenay-sous-Bois (FR)**

(72) Inventeur : **Bronoel, Guy**
**13, rue Jean de la Bruyère**
**F-78000 Versailles (FR)**

Inventeur : **Potier, Thierry**
**23, rue des Bleuets**
**F-93330 Neuilly-Sur-Marne (FR)**
Inventeur : **Tassin, Noelle**
**1, rue Beauséjour**
**F-94120 Fontenay-sous-Bois (FR)**
Inventeur : **Bugnet, Bernard**
**40, rue des Cheminets, Prégnin**
**F-01630 Saint-Genis-Pouilly (FR)**
Inventeur : **Doniat, Denis**
**3 bis, rue Jean-Baptiste Lanoz**
**F-94170 Le Perreux (FR)**
Inventeur : **Rouget, Robert**
**130, boulevard Murat**
**F-75016 Paris (FR)**

(74) Mandataire : **Moinas, Michel**
**Cabinet Michel Moinas 13 Chemin du Levant**
**F-01210 Ferney-Voltaire (FR)**

(54) **Electrodes de cadmium pour batteries alcalines.**

(57) L'électrode négative de cadmium a une structure servant de collecteur en mousse de nickel. Cette mousse est remplie d'un mélange composé essentiellement d'oxyde de cadmium et contient du sulfate de nickel, à raison de 1,8 à 2,7 % pondéraux du poids total du mélange, exprimés sous forme de nickel.

EP 0 494 833 A1

Jouve, 18, rue Saint-Denis, 75001 PARIS

La présente invention se rapporte à une électrode de cadmium pour batteries alcalines, ainsi qu'à un procède pour la fabrication de telles électrodes.

Les électrodes de cadmium pour batteries d'accumulateurs sont actuellement surtout réalisées suivant deux procédés. Pour le premier, il s'agit d'une imprégnation en hydroxyde de cadmium Cd(OH)$_2$ réalisée par voie chimique (précipitation) dans un support en nickel fritté. Pour le deuxième, plus récent, on procède à l'enduction d'un mélange oxyde de cadmium CdO + liant sur un support métallique qui est généralement un déployé ou un feuillard d'acier nickelé perforé.

Durant ces dernières années, la disponibilité sur le marché de structures métalliques alvéolaires du type mousse, en nickel, a incité à l'utilisation de telles structures comme collecteurs, dans lesquels on introduisait le mélange CdO + liant. On pouvait en effet s'attendre à ce que le recours à de telles structures puisse faciliter le drainage des charges dans la matière active et permette ainsi d'augmenter le rendement faradique du matériau CdO constituant l'électrode.

De ce point de vue, il faut noter, que depuis plus de cinq ans, il est connu que l'addition de nickel dans le mélange CdO + liant a une action bénéfique sur le rendement.

Dans la plupart des articles publiés sur le sujet, majoritairement soviétiques, le nickel est introduit sous la forme de poudre métallique ou d'hydroxyde de nickel. Seule une publication de V.M. Negeevich, G.L. Marchenko, L.N. Sagoyan et V.D. Kushkov dans Vopr. Khim. Khim. Technol. 87, (1988), 6-11, mentionne la possibilité d'introduire le nickel sous la forme de sulfate ou de nitrate. Pour l'obtention d'un rendement maximal, ces auteurs ont défini un rapport Ni(OH)$_2$/CdO égal à 0,08, leurs essais ayant porté sur des rapports compris entre 0,01 et 0,15.

Toutefois, à la connaissance de la Demanderesse, les auteurs précités ne travaillent pas sur des supports en mousse de nickel.

Partant de cette constatation et de l'hypothèse que le rapport Ni(OH)$_2$/CdO, optimum du point de vue du rendement, devrait dépendre de la structure du collecteur sur lequel ou dans lequel est introduite la masse active et que, dans le cas de l'utilisation d'un collecteur en mousse de nickel, on pouvait s'attendre à ce que la masse de nickel à ajouter au CdO puisse être plus faible que celle nécessaire à l'obtention d'un rendement faradique maximum dans le cas où le collecteur est un feuillard perforé ou un déployé, la Demanderesse a établi qu'en réalité, les interactions n'étaient pas aussi simples qu'il pouvait paraître au premier abord.

Or, le coût de l'électrode négative dépend fortement de la masse de nickel ajouté au CdO et de la forme sous laquelle est introduit ce nickel.

Ainsi, par exemple, il est connu de l'exposé EP-A-0 185 830 (Sorapec) d'ajouter le nickel sous forme de nitrate de nickel. De même, l'exposé GB-A-862 092 (VEB Grubenlampenwerke) décrit l'addition de nickel sous forme de sulfate, mais en quantités très petites, environ 0,1 à 3 % en poids exprimés sous forme de Ni.

Visant ce double objectif de rendement et de coût, l'invention proposée concerne une électrode négative de cadmium pour batteries alcalines, dans laquelle la structure servant de collecteur est une mousse de nickel. Cette mousse de nickel est remplie d'un mélange composé essentiellement d'oxyde de cadmium et contient du sulfate de nickel, de préférence sous forme de sulfate de nickel hexahydraté. Les quantités de nickel sont plus importantes qu'indiquées plus haut, entre 1,8 et 2,7 % pondéraux de nickel du poids total du mélange, ce qui équivaut par exemple à 8 à 12 % pondéraux exprimés sous forme de sulfate de nickel hexahydraté.

Avantageusement, l'électrode comprend également de la méthylcellulose, par exemple entre 0,5 et 2 % pondéraux du mélange total et un liant qui peut être du polytétrafluoroéthylène, à raison par exemple de 2 à 5 % pondéraux du mélange total.

La teneur en sulfate de nickel, sous forme de sulfate hexahydraté, est de préférence comprise entre 8 et 12 % pondéraux de la masse d'oxyde de cadmium, ou bien du total oxyde de cadmium + méthylcellulose + liant.

De préférence aussi, la mousse de nickel servant de collecteur a des alvéoles ayant un diamètre moyen compris entre 0,1 et 0,5 mm.

En se basant sur l'utilisation d'un tel collecteur alvéolaire dont la dimension des alvéoles est définie plus traditionnellement par le nombre d'alvéoles traversées pour une distance de 1 pouce, soit 45 alvéoles (ppi 45), la détermination :
– de la nature du composé de Ni à introduire dans CdO,
– de la gamme de teneur en ce composé pour l'obtention d'un rendement maximal, et
– du mode d'introduction de ce composé, a permis les constations suivantes :
D'abord que, pour une même teneur en Ni métal, les rendements sur CdO sont équivalents, quand on utilise une poudre de Ni(OH)$_2$ ou une poudre de Ni métal (granulométrie d'environ 3 micromètres). En revanche, ces rendements sont, pour la même teneur en Ni, plus élevés dans le cas où le nickel est introduit sous la forme de sulfate. Ainsi, pour une teneur de 10,6 % en sulfate (par rapport à la masse de CdO) soit 2,4 % en Ni métal, on obtient un rendement de 90 % alors que l'adjonction de 2,4 % en poudre de nickel ou 3,7 % en Ni(OH)$_2$ (soit 2,4 % en Ni) conduisent à des rendements de seulement 60 %.

Ensuite que, dans le cas de l'utilisation du sulfate de nickel, le rendement ne croît plus pour une teneur supérieure à 10 % en sulfate par rapport à CdO + 3 % de PTFE (liant) + 1 % méthylcellulose. A ce palier, le rendement sur CdO atteint 90 % alors que pour une teneur en sulfate de nickel de 3 à 4 %, il est seulement de l'ordre de 70 %.

Enfin que, notamment pour les électrodes ayant la capacité surfacique la plus élevée (donc les plus épaisses puisque, ayant la quantité de CdO la plus élevée par cm$^2$ de surface frontale), de meilleurs résultats étaient obtenus lorsque le sulfate de nickel était introduit en mélange dans la pâte avant l'enduction de celle-ci dans le support.

D'où un autre aspect de l'invention ayant trait à un procède de fabrication d'une électrode négative de cadmium comme définie ci-dessus, consistant à mélanger le sulfate de nickel à la pâte comprenant l'oxyde de cadmium, éventuellement le liant et la méthylcellulose, avant remplissage de la mousse de nickel, par exemple par empatage.

La présente invention sera mieux comprise en relation à l'exemple ci-joint donne à titre purement illustratif et non limitatif.

**Exemple**

On prépare un mélange comprenant (en % pondéraux) 87,3 % de CdO, 2,7 % de polytétrafluoroéthylène (PTFE) sous la forme d'une suspension du type 30 N (60 %) vendue par DUPONT DE NEMOURS, la masse de PTFE étant exprimée en extrait sec, 0,9 % méthylcellulose, 9,1 % de sulfate de nickel sous forme de solution à 440 g/l (la masse est exprimée en $NiSO_4,6H_2O$), soit 2,04 % exprimés sous forme de Ni.

On empâte avec ce mélange, une fois convenablement fibrillisé, une mousse de nickel du type Metapore vendue par la Société EPCI, de ppi 45 et d'épaisseur comprise entre 0,5 et 3 mm, en fonction de la capacité surfacique recherchée pour l'électrode.

Cette électrode présente d'excellentes caractéristiques de rendement, d'au moins 90 %.

**Exemple Comparatif**

On procède comme décrit à l'exemple ci-dessus, mais en substituant le nitrate de nickel au sulfate de nickel. Ainsi que cela est décrit dans EP-A-0 185 830 cité précédemment, le nitrate de nickel est ajouté par trempage, après constitution de l'électrode.

On constate que le rendement faradique obtenu sur CdO n'est que de 80 % au lieu de 90 %.

**Revendications**

1. Electrode négative de cadmium, dont la structure servant de collecteur est une mousse de nickel, cette mousse étant remplie d'un mélange composé essentiellement d'oxyde de cadmium et contenant du sulfate de nickel, caractérisée en ce qu'elle contient du sulfate de nickel à raison de 1,8 à 2,7 % pondéraux du poids total du mélange, exprimés sous forme de nickel.

2. Electrode selon la revendication 1, caractérisée en ce qu'elle comprend du polytétrafluoroéthylène et de la méthylcellulose.

3. Electrode selon la revendication 1 ou 2, caractérisée en ce que la quantité de sulfate de nickel, exprimé sous de forme de sulfate hexahydraté, est comprise entre 8 et 12 % pondéraux du poids total du mélange.

4. Electrode selon la revendication 2, caractérisée en ce que le polytétrafluoroéthylène représente entre 2 et 5 % pondéraux du mélange total et en ce que la méthylcellulose représente entre 0,5 et 2 % pondéraux du mélange total.

5. Electrode selon la revendication 1, caractérisée en ce que la mousse de nickel a des alvéoles ayant un diamètre moyen compris entre 0,1 et 0,5 mm.

6. Procède de fabrication de l'électrode négative de cadmium selon la revendication 1, caractérisé en ce qu'on empâte la mousse de nickel avec un mélange préalablement préparé d'oxyde de cadmium et de sulfate de nickel.

7. Procède selon la revendication 6, caractérisé en ce que le sulfate de nickel est du sulfate de nickel hexahydraté.

EP 0 494 833 A1

Office européen
des brevets

**RAPPORT DE RECHERCHE EUROPEENNE**

Numero de la demande

EP    92 42 0001

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,Y | EP-A-0 185 830 (SORAPEC)<br>* page 4, ligne 7 - ligne 23; revendications 1,2,4-6 * | 1,2,4 | H01M4/24<br>H01M4/36 |
| D,Y | GB-A-862 092 (VEB GRUBENLAMPENWERKE)<br>* page 2, ligne 117 - page 3, ligne 13; revendication 16 * | 1,2,4 | |
| A | FR-A-1 087 590 (VEB GRUBENLAMPENWERKE)<br>* page 2, colonne de gauche, ligne 53 - colonne de droite, ligne 8 *<br>* Résumé nr 2,4,5 * | 6 | |
| A | FR-A-2 066 850 (SAFT)<br>* revendications 1,2,8,10 * | 1,6,7 | |
| A | DD-A-33 525 (H.J.SEIFERT AND ALL)<br>* colonne 2, ligne 23 - ligne 28 *<br>* colonne 3, ligne 13 - ligne 19; revendication 1 * | 1 | |
| A | CHEMICAL ABSTRACTS, vol. 100, no. 16, 16 Avril 1984, Columbus, Ohio, US;<br>abstract no. 124145D, 'CADMIUM ANODES FOR SECONDARY ALKALINE BATTERIES'<br>page 174 ; colonne 1 ;<br>* abrégé * | 1 | DOMAINES TECHNIQUES RECHERCHES (Int. Cl.5)<br><br>H01M |
| A | CHEMICAL ABSTRACTS, vol. 104, no. 18, 5 Mai 1986, Columbus, Ohio, US;<br>abstract no. 152492R, 'Manufacture of paste-type cadmium anode'<br>page 212 ; colonne 1 ;<br>* abrégé * | 1 | |
| A | DD-A-252 924 (TECHNISCHE UNIVERSITÄT DRESDEN) | | |

Le présent rapport a été établi pour toutes les revendications

| Lieu de la recherche | Date d'achèvement de la recherche | Examinateur |
|---|---|---|
| LA HAYE | 04 MARS 1992 | D'HONDT J.W. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

4